# EUROPEAN PATENT SPECIFICATION

(11) **EP 3 499 359 B1**
(45) Date of publication and mention of the grant of the patent: **09.12.2020**
(21) Application number: 18211288.8
(22) Date of filing: 10.12.2018
(51) Int. Cl.: G06F 3/12

(54) **SYSTEM, DEVICE, METHOD AND PROGRAM**
SYSTEM, VORRICHTUNG, VERFAHREN UND PROGRAMM
SYSTÈME, DISPOSITIF, PROCÉDÉ ET PROGRAMME

(30) Priority: 14.12.2017 JP 2017239437
(43) Date of publication of application: 19.06.2019
(73) Proprietor: Konica Minolta, Inc., Tokyo 100-7015 (JP)
(72) Inventor: OTSUKA, Takashi, Tokyo, 100-7015 (JP)
(74) Representative: Gille Hrabal

(56) References cited:
- WO-A1-2011/111374
- US-A1- 2004 223 182
- US-A1- 2013 278 954

## Description

Japanese Patent Application No. 2017-239437 filed on December 14, 2017, including description, claims, drawings, and abstract the entire disclosure is incorporated herein by reference in its entirety.

### Background

### Technological Field

The present disclosure relates to a system, a device, a method, and a program, and more specifically to a system, a device, a method, and a program for providing an environment for an information processing terminal to use a peripheral device (device).

### Description of the Related art

Distribution of Windows (registered trademark) 8 serving as an operating system (OS) was started recently. When Windows 8 is installed in a personal computer (PC), a printer driver called version 4 (V4) is installed in the PC to use a printer under Windows 8. Although the printer driver (V4) has a print setting user interface (UI) (Desktop UI), the user is unable to make detailed print settings only with this printer driver when making a print from a Windows store application. The user then installs a device app (WSDA: Windows Store Device Application) in addition to the printer driver in order to make detailed print settings (Modem UI).

The installation process of a device app will now be described. First of all, once a printer driver is installed in a PC, the PC connects to a device (printer). Windows on the PC acquires device information that identifies the device from the connected device and acquires device metadata of the device from a server of a vendor of the OS, using the acquired device information. Triggered by the device metadata, Windows on the PC then downloads (installs) the device app from the Windows store, based on the app information predefined in the device metadata.

In the method of downloading a device app as described above, when different PCs connect to the same device, a common device app corresponding to the device is installed in the PCs.

Japanese Laid-Open Patent Publication No. 2014-203268 discloses a technique of installing an appropriate device driver or a device control application, etc. in a computer, considering conditions such as UI environment of the computer, in order to use a peripheral device such as a printer connected to the computer. The documents US2013/278954A1, WO2011/111374A1 and US2004/0223182A1 disclose further systems for installing control applications.

### Summary

In a situation, such as an office, in which a plurality of users operate their PCs to share a remote printer, there is a demand for using a device application different for each user. The present disclosure is directed to such a demand and an object of the present disclosure is to enable device applications for controlling a device to vary among users.

The problem is solved by the features of the independent apparatus and method claims. Preferred embodiments are described in the dependent claims. A system reflecting one aspect of the disclosure comprises a device configured to operate in cooperation with an information processing terminal and a server configured to communicate with the information processing terminal. The device includes a data storing unit for storing a device identifier for identifying the device, in association with each of a plurality of users of the information processing terminal and a device controller configured to identify a user of the information processing terminal and transmit the device identifier associated with the identified user to the information processing terminal. The server includes an app storing unit to store a device application for controlling the device, in association with each of a plurality of the device identifiers and a server controller configured to receive the device identifier from the information processing terminal and transmit the device application associated with the received device identifier to the information processing terminal.

In the disclosure above, the app storing unit further stores device metadata including an app identifier for identifying one or more device applications, in association with each of the device identifiers. The server controller is further configured to receive the device identifier from the information processing terminal and transmit the device metadata associated with the received device identifier to the information processing terminal. The information processing terminal includes a terminal controller configured to receive the device metadata from the server, extract one or more app identifiers from the received device metadata, and transmit the extracted one or more app identifiers to the server.

A system according another aspect of the present disclosure comprises a device configured to operate in cooperation with an information processing terminal and a server configured to communicate with the information processing terminal. The device includes a user information storing unit for storing an app identifier for identifying a device application for controlling the device, in association with each of a plurality of users of the information processing terminal, and a device controller configured to identify a user of the information processing terminal, generate device metadata including the app identifier associated with the identified user and a device identifier for identifying the device, and transmit the generated device metadata to the information processing terminal. The server includes an app storing unit to store the device application in association with each of a plurality of the device metadata and a server controller configured to receive the device metadata from the information processing terminal and transmit the device application associated with the received device metadata to the information processing terminal.

A device according to another aspect of the present disclosure is configured to operate in cooperation with an information processing terminal connected to a server through a network. The server includes an app storing unit to store a device application for controlling the device, in association with each of a plurality of device identifiers. The information processing terminal transmits a distribution request for a device application for controlling the device to the server. The device includes a data storing unit for storing a device identifier in association with each of a plurality of users of the information processing terminal and a device controller configured to identify a user of the information processing terminal and transmit the device identifier associated with the identified user to the information processing terminal. The distribution request includes a distribution request for the device application associated with the device identifier received by the information processing terminal from the device controller.

A device according to another aspect of the present disclosure is configured to operate in cooperation with an information processing terminal connected to a server through a network. The server includes an app storing unit to store a device application for controlling the device, in association with each of a plurality of device metadata. The information processing terminal transmits a distribution request for a device application for controlling the device to the server. The device includes a user information storing unit for storing an app identifier of the device application in association with each of a plurality of users of the information processing terminal and a device controller configured to identify a user of the information processing terminal, generate device metadata including the app identifier associated with the identified user and a device identifier of the device, and transmit the generated device metadata to the information processing terminal. The distribution request includes a distribution request for the device application associated with the app identifier in the device metadata received by the information processing terminal from the device controller.

In the disclosure above, the information processing terminal includes a storage unit to store a cooperative application for allowing the information processing terminal to operate in cooperation with the device, and the device application includes an application for making setting of cooperative operation for the cooperative application.

In the disclosure above, the device application includes an application of a user interface for the setting.

In the disclosure above, the device controller is further configured to identify a user of the information processing terminal at a predetermined time. The predetermined time includes at least one of: when the user logs in to the information processing terminal; when the cooperative application is stored into the storage unit; when the information processing terminal starts communication with the device; and when the cooperative application is started.

In the disclosure above, the device controller is configured to acquire a user identifier from the information processing terminal, and the user identifier includes a login ID of a user who logs in to the information processing terminal or a network address of the information processing terminal.

In the disclosure above, the data storing unit further stores the user identifier of each of the users and the device identifier associated with the user identifier, and the device controller is further configured to add or change the user identifier or the device identifier in the data storing unit.

In the disclosure above, the user information storing unit further stores the user identifier of each of the users and the app identifier associated with the user identifier, and the device controller is further configured to add or change the user identifier in the user information storing unit or change the device identifier.

In the disclosure above, the device includes an image forming apparatus.

According to another aspect of the present disclosure, a method of controlling a device configured to operate in cooperation with an information processing terminal connected to a server through a network is provided. The server includes an app storing unit to store a device application for controlling the device, in association with each of a plurality of device identifiers. The information processing terminal includes a communication controller to transmit a distribution request for a device application for controlling the device to the server. The device includes a data storing unit for storing a device identifier in association with each of a plurality of users of the information processing terminal. The method comprises the steps of: identifying a user of the information processing terminal; and transmitting the device identifier associated with the identified user to the information processing terminal. The distribution request includes a distribution request for the device application associated with the device identifier received by the information processing terminal from the device controller.

According to another aspect of the present disclosure, a method of controlling a device configured to operate in cooperation with an information processing terminal connected to a server through a network is provided. The server includes an app storing unit to store a device application for controlling the device, in association with each of a plurality of device metadata. The information processing terminal includes a communication controller to transmit a distribution request for a device application for controlling the device to the server. The device includes a user information storing unit for storing an app identifier of the device application, in association with each of a plurality of users of the information processing terminal. The method comprises the steps of: identifying a user of the information processing terminal; generating device metadata including the app identifier associated with the identified user and a device identifier of the device; and transmitting the generated device metadata to the information processing terminal. The distribution request includes a distribution request for the device application associated with the app identifier in the device metadata received by the information processing terminal from the device.

A program according to another aspect of the present disclosure allows a computer to execute the method described above.

According to an aspect of the present disclosure, device applications for controlling a device can vary among users.

### Brief Description of the Drawings

The advantages and features provided by one or more embodiments of the invention will become more fully understood from the detailed description given hereinbelow and the appended drawings which are given by way of illustration only, and thus are not intended as a definition of the limits of the present invention.
Fig. 1 is a diagram showing an overall configuration of a system 1 according to a first embodiment.
Fig. 2 is a diagram schematically showing an exemplary hardware configuration of an image forming apparatus 100 according to the first embodiment.
Fig. 3 is a diagram schematically showing an exemplary hardware configuration of a server 300 according to the first embodiment.
Fig. 4 is a diagram schematically showing an exemplary hardware configuration of an information processing terminal 200 according to the first embodiment.
Fig. 5 is a diagram showing an exemplary configuration of an operation system of information processing terminal 200 according to the first embodiment.
Fig. 6 is a block diagram schematically showing a functional configuration of the units according to the first embodiment.
Fig. 7 is a flowchart of the process of acquiring a device app 303 by information processing terminal 200 according to the first embodiment.
Fig. 8 is a diagram schematically showing association between user identifier 101 and device ID 102 according to the first embodiment.
Fig. 9 is a diagram schematically showing association between user identifier 101 and device ID 102 according to the first embodiment.
Fig. 10 is a block diagram schematically showing a functional configuration of the units according to a second embodiment.
Fig. 11 is a diagram schematically showing a configuration of user information 101A according to the second embodiment.
Fig. 12 is a diagram schematically showing a configuration of user information 101A according to the second embodiment.
Fig. 13 is a diagram showing an example of device metadata 302A generated by a metadata generator 131 according to the second embodiment.
Fig. 14 is a diagram showing an example of device metadata 302A generated by metadata generator 131 according to the second embodiment.
Fig. 15 is a flowchart of the process of acquiring a device app 303 by an information processing terminal 200A according to the second embodiment.

### Detailed Description of Embodiments

Hereinafter, one or more embodiments of the present invention will be described with reference to the drawings. However, the scope of the invention is not limited to the disclosed embodiments.

Embodiments of the present invention will be described below with reference to the drawings. In the following description, the same parts and components are denoted by the same reference signs. Their names and functions are also the same. A detailed description thereof will not be repeated.

First of all, the terms in the present embodiment are described. "Information processing terminal" includes a variety of portable or desktop personal computers (PCs). The information processing terminal may include a terminal with PC functions, such as a tablet terminal and a smartphone.

"Device" is a device that operates in cooperation with an information processing terminal, such as a peripheral device of a PC, and examples include, but not limited to, a variety of devices, such as printer, display, keyboard, and communication device.

"Device driver" is an example of "cooperative application". The device driver includes a program for exchanging data between an OS of the information processing terminal or data and the device, or both of a program and data.

"Device app" is an example of "device application". The device app is an application different from the device driver and includes an application for providing the functions of the device driver. The device app may include an application that provides a user interface (UI) for accepting the settings for the device. The settings include, for example, the setting for controlling the device or the setting of status (state information) to be acquired from the device. The device app includes a program or may include both of a program and data.

### [First Embodiment]

### <A. Overview of Disclosure >

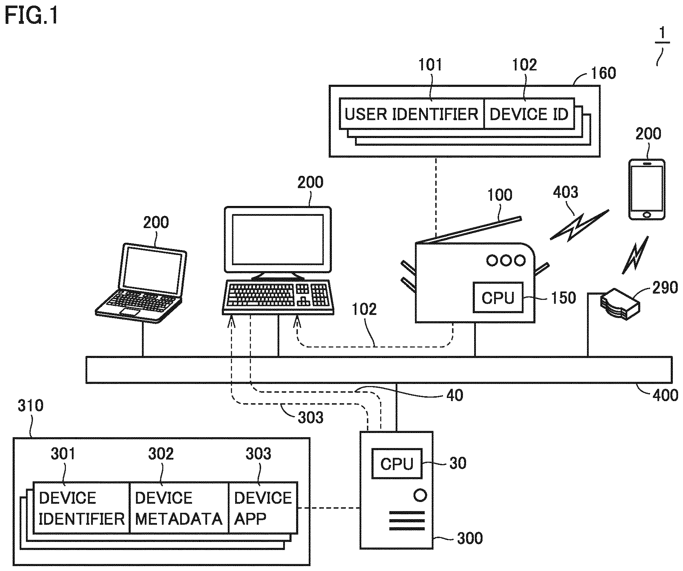

Referring to Fig. 1, an overview of the present disclosure will be described. Fig. 1 is a diagram showing an overall configuration of a system 1 according to a first embodiment.

Referring to Fig. 1, system 1 includes an image forming apparatus 100, which is an example of "device", one or more information processing terminals 200, and a server 300. In system 1, image forming apparatus 100 and information processing terminal 200 communicate through a network 400 or 403. Network 400 includes a local area network (LAN) or a global network. Network 403 may include short-range wireless communication, such as near field communication (NFC). Server 300 may include, for example, a cloud server. Information processing terminal 200 has a configuration equivalent to a computer and at least includes a memory to store a program, a processor to execute a program, a communication circuit, and an instruction input device. Information processing terminal 200 may be connected to network 400 via a relay 290 such as a router.

System 1 may include a plurality of image forming apparatuses 100. System 1 may include one information processing terminal 200.

Server 300 includes an app storing unit 310 to store device metadata 302 and a device app 303 of image forming apparatus 100 associated (that is, linked) with each of a plurality of device identifiers 301 corresponding to image forming apparatus 100, and a central processing unit (CPU) 30 which is an example of "server controller".

Image forming apparatus 100 includes a storage unit 160 having a storage area for storing a user identifier 101 and a device ID (identifier) 102 associated with each of a plurality of users, and a central processing unit (CPU) 150 which is an example of "device controller". The storage area that is part of storage unit 160 is an example of "data storing unit".

Information processing terminal 200 transmits a user identifier to image forming apparatus 100. Image forming apparatus 100 transmits device ID 102 associated with user identifier 101 that matches the user identifier acquired from information processing terminal 200 to information processing terminal 200. Information processing terminal 200 transmits a distribution request 40 for a device app including device ID 102 received from image forming apparatus 100 to server 300. Server 300 extracts device ID 102 included in distribution request 40 from information processing terminal 200, searches app storing unit 310 for device app 303 associated with device identifier 301 that matches device ID 102, and transmits the retrieved device app 303 to information processing terminal 200.

Thus, in system 1, device app 303 to be distributed (transmitted) to information processing terminal 200 can be specified by device ID 102 associated with user identifier 101 of information processing terminal 200. In other words, device app 303 to be distributed to information processing terminal 200 can vary for each user of information processing terminal 200.

### <B. Hardware Configuration of Image Forming Apparatus 100>

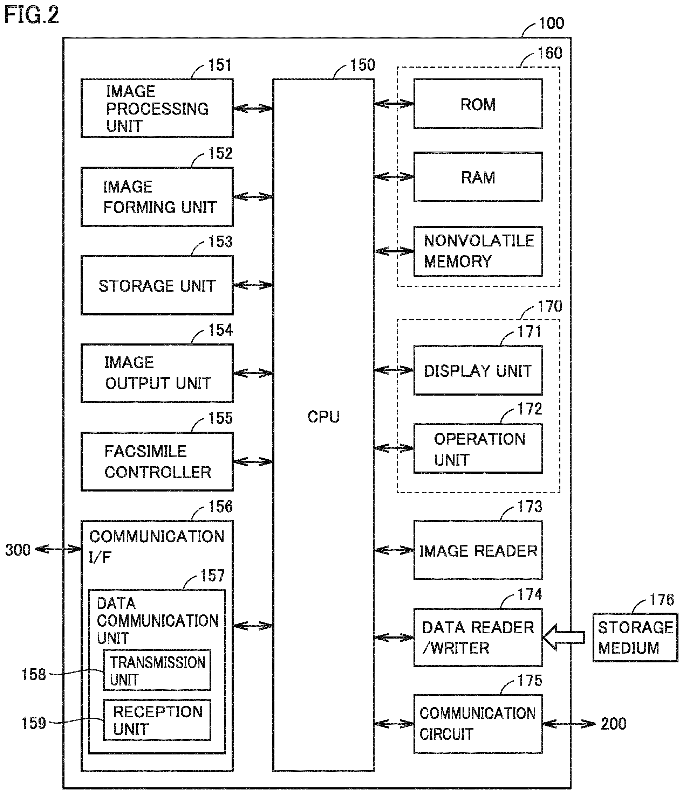

Fig. 2 is a diagram schematically showing an exemplary hardware configuration of image forming apparatus 100 according to the first embodiment. Referring to Fig. 2, image forming apparatus 100 is illustrated as a printer, a copier, or a multi-function peripheral (MFP) including them in combination. Image forming apparatus 100 includes a CPU 150, a storage unit 160 for storing a program and data, an information input/output unit 170, a communication I/F (interface) 156 for communicating with server 300 through network 400 or relay 290, a communication circuit 175 for communicating with information processing terminal 200 through network 400 or 403, and a variety of processing units.

Storage unit 160 includes a read only memory (ROM) for storing a program executed by CPU 150 and data, a random access memory (RAM), and a nonvolatile memory. The RAM serves as a working area for CPU 150 to execute a program.
input/output unit 170 includes a display unit 171 including a display and an operation unit 172 operated by a user to input information to image forming apparatus 100. Input/output unit 170 may be provided as a touch panel in which display unit 171 and operation unit 172 are integrated.

Communication I/F 156 includes a circuit such as a network interface card (NIC). Communication I/F 156 includes a data communication unit 157 for communicating with an external device including server 300 through a network. Data communication unit 157 includes a transmission unit 158 to transmit data to an external device including server 300 through a network and a reception unit 159 to receive data from an external device including server 300 through a network.

Communication circuit 175 includes a communication circuit, for example, such as a local area network (LAN) or a near field communication (NFC), for communicating with information processing terminal 200.

A variety of processing units described above include an image processing unit 151, an image forming unit 152, a storage unit 153 such as a hard disk for storing a variety of data including image data, an image output unit 154 to control a not-shown printer, a facsimile controller 155 to control a not-shown facsimile circuit, an image reader 173 for optically reading a document to obtain image data, and a data reader/writer 174 to which an external storage medium 176 is detachably attached.

Image output unit 154 drives the printer using print data received from information processing terminal 200. Data reader/writer 174 includes a circuit to read a program or data from the attached external storage medium 176 and a circuit to write data into external storage medium 176.

### <C. Hardware Configuration of Server 300>

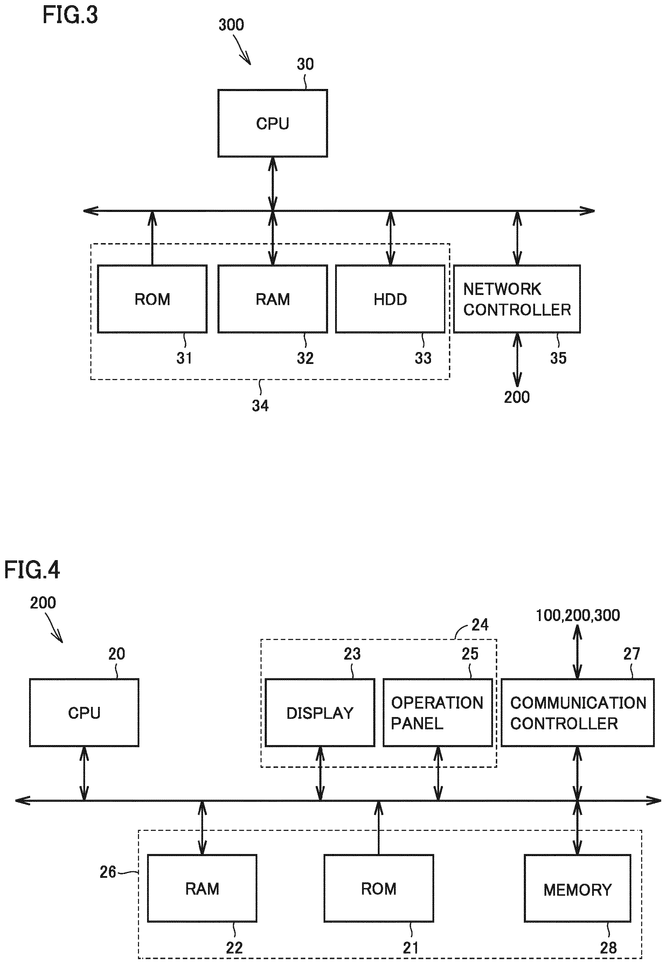

Fig. 3 is a diagram schematically showing an exemplary hardware configuration of server 300 according to the first embodiment. Referring to Fig. 3, server 300 includes a CPU 30, a storage unit 34, and a network controller 35 to communicate with image forming apparatus 100 or information processing terminal 200. Storage unit 34 includes a read only memory (ROM) 31 for storing a program to be executed by CPU 30 and data, a random access memory (RAM) 32, and a hard disk drive (HDD) 33. RAM 32 includes an area for storing a variety of information and a working area for executing a program in CPU 30. Network controller 35 includes a circuit such as NIC.

### <D. Hardware Configuration of Information Processing Terminal 200>

Fig. 4 is a diagram schematically showing an exemplary hardware configuration of information processing terminal 200 according to the first embodiment. Referring to Fig. 4, information processing terminal 200 includes a CPU 20, a display 23, an operation panel 25 for a user to input information to information processing terminal 200, a storage unit 26, and a communication controller 27. Storage unit 26 includes a read only memory (ROM) 21 for storing a program executed by CPU 20 and data, a random access memory (RAM) 22, and a memory 28 including a hard disk device. Display 23 and operation panel 25 may be integrally configured as a touch panel 24. Communication controller 27 includes a communication circuit such as a NIC or LAN circuit for communicating with another information processing terminal 200 or image forming apparatus 100 or server 300.

### <E. System Configuration of Information Processing Terminal 200>

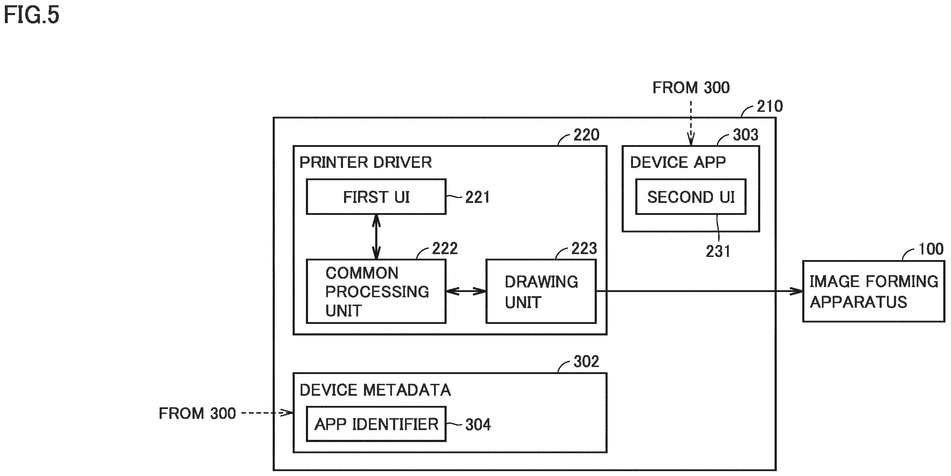

Fig. 5 is a diagram showing an exemplary configuration of the operation system of information processing terminal 200 according to the first embodiment. Operation system 210 in Fig. 5 includes device metadata 302, and a printer driver 220 and a device app 303 activated by CPU 20. In the first embodiment, image forming apparatus 100 (more specifically, printer) is an example of "device", and printer driver 220 is an example of "device driver". It should be noted that the device and the device driver are not limited thereto.

Printer driver 220 includes a first UI (user interface) 221, a common processing unit 222, and a drawing unit 223. First UI 221 includes a print setting UI for desktop application. Drawing unit 223 includes a processing unit that generates a print job and transmits the print job to image forming apparatus 100. Common processing unit 222 refers to the processing unit other than first UI 221 and drawing unit 223.

Device app 303 includes an application provided by the app store of server 300. Device app 303 includes, for example, a second UI 231 for detailed print settings provided by the app store. Second UI 231 is an application, unlike first UI 221, for enabling detailed print settings (for example, color/monochrome) and is downloaded for each user. The kind of app included in device app 303 is not limited to the UI for print settings.

Information processing terminal 200 receives device metadata 302 from server 300. Device metadata 302 includes one or more app identifiers 304 for identifying device app 303.

When the user logs in to information processing terminal 200, CPU 20 transmits, for example, the user ID acquired at the time of login to image forming apparatus 100. Image forming apparatus 100 transmits device ID 102 associated with user identifier 101 that matches the user ID to information processing terminal 200. Information processing terminal 200 receives device metadata 302 associated with device ID 102 from server 300. Information processing terminal 200 extracts one or more app identifiers 304 included in device metadata 302 and transmits a distribution request 40 including the extracted app identifier 304 to server 300. Server 300 distributes a device app 303 associated with app identifier 304 extracted from distribution request 40 to information processing terminal 200 that has made the request. Information processing terminal 200 thus can acquire device app 303 corresponding to the user who has logged in.

### <F. Functional Configuration of Units>

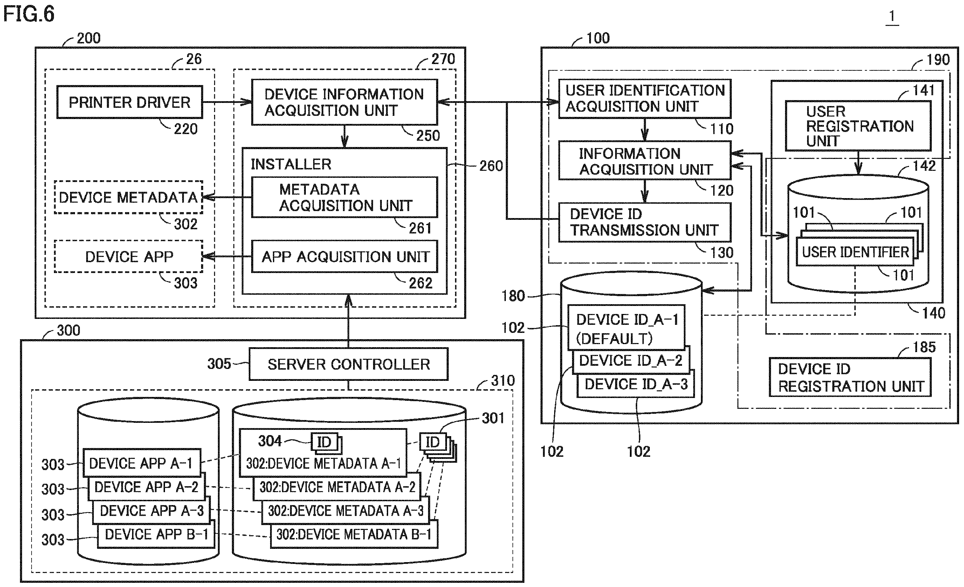

Fig. 6 is a block diagram schematically showing a functional configuration of the units according to the first embodiment. Referring to Fig. 6, information processing terminal 200 includes a printer driver 220, device metadata 302 and a device app 303 received from server 300, and a terminal controller 270. Terminal controller 270 includes a device information acquisition unit 250 and an installer 260. Installer 260 has a metadata acquisition unit 261 and an app acquisition unit 262. Printer driver 220, device metadata 302, and device app 303 are stored in storage unit 26. The units of terminal controller 270 correspond to a program executed by CPU 20.

Image forming apparatus 100 includes a data storing unit 180 and a user information storing unit 142 corresponding to storage unit 160 or 153, and a device controller 190. Device controller 190 includes a user identification acquisition unit 110, an information acquisition unit 120, a device ID transmission unit 130, a user registration unit 141, and a device ID registration unit 185. The units of device controller 190 correspond to a program executed by CPU 150.

Server 300 includes a server controller 305 corresponding to a program executed by CPU 30 and an app storing unit 310 corresponding to storage unit 34. App storing unit 310 stores different kinds of device apps 303. App storing unit 310 also stores device metadata 302 associated with each of a plurality of device identifiers 301 for identifying image forming apparatus 100. Device metadata 302 has an app identifier 304 for identifying each of one or more device apps 303 of a plurality of device apps 303 in app storing unit 310. Each device metadata 302 is associated with one or more device apps 303 identified by app identifier 304 of device metadata 302.

Terminal controller 270, device controller 190, and server controller 305 each are not limited to a program executed by the CPU and may include, for example, a circuit such as application specific integrated circuit (ASIC) or field-programmable gate array (FPGA) or may include a combination of a program and a circuit.

In image forming apparatus 100, user identification acquisition unit 110 acquires the user identifier of the user of information processing terminal 200 from information processing terminal 200. In embodiments, this user identifier is, for example, but not limited to, login ID (user name, login name, etc.) of the user of information processing terminal 200.

Data storing unit 180 may store one or more kinds of device IDs 102 assigned or allocated to image forming apparatus 100. Devices ID 102 indicate different IDs and each corresponds to the identifier that identifies image forming apparatus 100. For example, device ID 102 includes a default (standard) device ID 102 and other kinds of device IDs 102. User information storing unit 142 stores user identifier 101 of each of one or more users of information processing terminal 200. Each user identifier 101 in user information storing unit 142 is associated with one device ID 102 in data storing unit 180.

Information acquisition unit 120 searches user information storing unit 142 for user identifier 101 that matches the login ID, based on the login ID (user identifier) acquired by user identification acquisition unit 110 from information processing terminal 200. Information acquisition unit 120 searches data storing unit 180 for device ID 102 associated with user identifier 101, based on the retrieved user identifier 101. Device ID transmission unit 130 controls communication circuit 175 such that the retrieved (acquired) device ID 102 is transmitted to information processing terminal 200.

In information processing terminal 200, device information acquisition unit 250 controls communication circuit 175 such that the login ID (user identifier) is transmitted to image forming apparatus 100 when the user logs in. Device information acquisition unit 250 also controls communication circuit 175 such that device ID 102 transmitted by device ID transmission unit 130 of image forming apparatus 100 is received.

Installer 260 receives device app 303 associated with device identifier 301 that matches device ID 102 from server 300 and installs the received device app 303 into storage unit 26. Specifically, metadata acquisition unit 261 installs device metadata 302 associated with device identifier 301 that matches device ID 102 from server 300 into storage unit 26. App acquisition unit 262 controls communication controller 27 such that a distribution request 40 for device app 303 is transmitted to server 300, using one or more app identifiers 304 extracted from device metadata 302 in storage unit 26. App acquisition unit 262 controls communication controller 27 such that device app 303 associated with device metadata 302 (app identifier 304) distributed (transmitted) from server 300 in response to distribution request 40 is received. App acquisition unit 262 installs the received device app 303 into storage unit 26.

### <G. Process Flowchart>

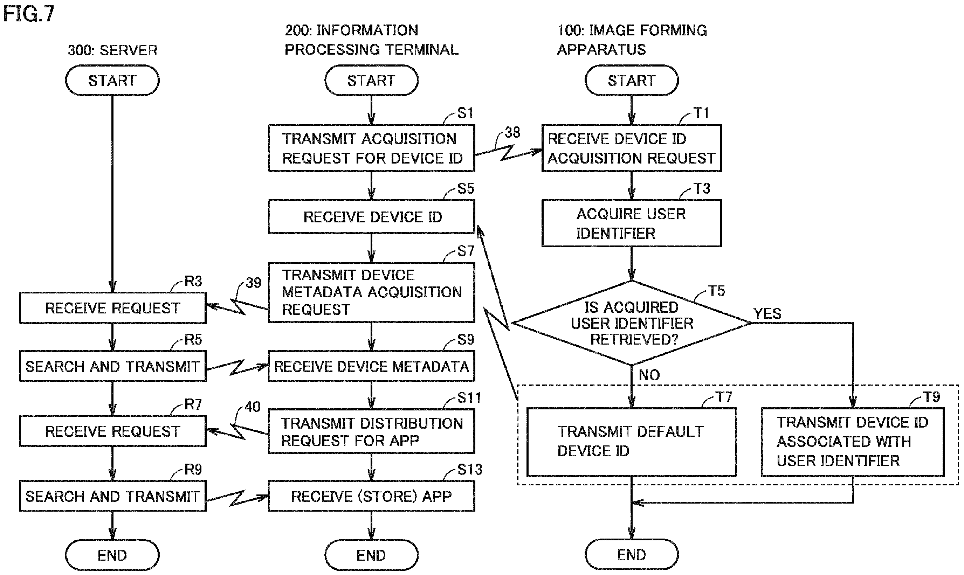

Fig. 7 is a flowchart of the process of acquiring a device app 303 by information processing terminal 200 according to the first embodiment. The flowchart in Fig. 7 shows the flowchart of the process performed in each of server 300, information processing terminal 200, and image forming apparatus 100. Each flowchart is stored as a program in the storage unit and read by the CPU from the storage unit for execution.

Referring to Fig. 7, the flowchart on the information processing terminal 200 side is stored as a program in storage unit 26, and the program is read by CPU 20 from storage unit 26 for execution. First of all, device information acquisition unit 250 accepts a login ID from CPU 20 when the user logs in to information processing terminal 200 to activate printer driver 220. Device information acquisition unit 250 controls communication controller 27 such that an acquisition request 38 for device ID 102 is transmitted to image forming apparatus 100 (step S1). Acquisition request 38 includes the login ID. Device information acquisition unit 250 controls communication controller 27 such that acquisition request 38 transmitted from image forming apparatus 100 is received (step S5).

Metadata acquisition unit 261 controls communication controller 27 such that an acquisition request 39 for device metadata 302 including device ID 102 received from image forming apparatus 100 is transmitted to server 300 (step S7). Metadata acquisition unit 261 controls communication controller 27 such that device metadata 302 transmitted from server 300 is received (step S9). Metadata acquisition unit 261 stores the received device metadata 302 into storage unit 26.

App acquisition unit 262 controls communication controller 27 such that a distribution request 40 including app identifier 304 extracted from device metadata 302 in storage unit 26 is transmitted to server 300 (step S11). Here, app acquisition unit 262 may selectively extract one or more app identifiers from among app identifiers 304 of device metadata 302, based on a predetermined criterion. The predetermined criterion includes, for example, but not limited to, a criterion based on the expiry data if device app 303 corresponding to app identifier 304 has an expiry date. App acquisition unit 262 selectively extracts only app identifier 304 that has expired from device metadata 302. This processing can reduce the volume of device apps 303 transmitted from server 300.

App acquisition unit 262 controls communication controller 27 such that device app 303 transmitted from server 300 is received (step S13). App acquisition unit 262 stores device app 303 received from server 300 into storage unit 26.

The flowchart on the image forming apparatus 100 side is stored as a program in storage unit 160 or 153, and the program is read by CPU 150 from storage unit 160 or 153 for execution. First of all, user identification acquisition unit 110 controls communication circuit 175 such that an acquisition request 38 for device ID 102 is received from information processing terminal 200 (step T1). User identification acquisition unit 110 outputs the login ID included in the received acquisition request 38 to information acquisition unit 120.

Information acquisition unit 120 acquires user identifier 101 based on the login ID from user identification acquisition unit 110 (step T3). Specifically, information acquisition unit 120 searches user information storing unit 142 based on the login ID and acquires user identifier 101 that matches the login ID.

Information acquisition unit 120 determines whether user identifier 101 is retrieved (acquired) at step T3 (step T5). When information acquisition unit 120 determines that device ID 102 associated with user identifier 101 is retrieved (YES at step T5), device ID transmission unit 130 controls communication circuit 175 such that device ID 102 retrieved by information acquisition unit 120 (that is, associated with user identifier 101) is transmitted to information processing terminal 200 (step T9).

On the other hand, when information acquisition unit 120 determines that device ID 102 associated with user identifier 101 fails to be retrieved (NO at step T5), device ID transmission unit 130 controls communication circuit 175 such that a default device ID 102 in data storing unit 180 is transmitted to information processing terminal 200 (step T7). Thus, the user whose user identifier 101 is not registered in user information storing unit 142 can be provided with a default device ID 102.

The flowchart on the server 300 side is stored as a program in storage unit 34, and the program is read by CPU 30 from storage unit 34 for execution. First of all, server controller 305 controls network controller 35 such that an acquisition request 39 for device metadata 302 is received from information processing terminal 200 (step R3). Server controller 305 searches app storing unit 310 for device metadata 302 associated with device ID 102, based on device ID 102 included in the received acquisition request 39. Server controller 305 controls network controller 35 such that the retrieved device metadata 302 is transmitted to information processing terminal 200 (step R5).

Server controller 305 also controls network controller 35 such that distribution request 40 for device app 303 is received from information processing terminal 200 (step R7). Server controller 305 searches app storing unit 310 for one or more device apps 303 associated with one or more app identifiers 304 in the received distribution request 40. Server controller 305 controls network controller 35 such that the retrieved one or more device apps 303 are transmitted to information processing terminal 200 (step R9).

With the process in Fig. 7, information processing terminal 200 can receive device app 303 associated with the user from server 300 through image forming apparatus 100.

### <H. Example of Association Between User Identifier and Device ID>

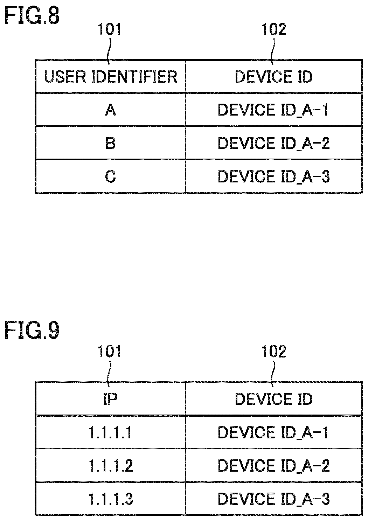

Fig. 8 and Fig. 9 are diagrams schematically showing the association between user identifier 101 and device ID 102 according to the first embodiment. In the first embodiment, in image forming apparatus 100, as shown in Fig. 8, a device ID 102 is associated with each user identifier 101 that matches the login ID as described above. User identifier 101 is not limited to the login ID and may be an Internet protocol (IP) address, which is an example of the network address assigned or allocated to information processing terminal 200 for identifying information processing terminal 200 in the network, as shown in Fig. 9. User identifier 101 may not be an IP address, and any network address that is assigned or allocated to information processing terminal 200, for example, a media access control (MAC) address can be used. Alternatively, user identifier 101 may be a combination of the login ID and the network address.

### <I. Registration of Information>

In the first embodiment, the contents in data storing unit 180 or user information storing unit 142 of image forming apparatus 100 can be changed using a user operation accepted through operation unit 172. Specifically, device ID registration unit 185 can store (register) a device ID 102 into data storing unit 180 based on a user operation. Device ID registration unit 185 can also delete or rewrite a device ID 102 in data storing unit 180, based on a user operation. User registration unit 141 can also store (register) a user identifier 101 into user information storing unit 142, based on a user operation. User registration unit 141 can also delete or rewrite a user identifier 101 in user information storing unit 142, based on a user operation.

When the content in data storing unit 180 or user information storing unit 142 is changed, device controller 190 changes the association between user identifier 101 in user information storing unit 142 and device ID 102 in device ID registration unit 185, in accordance with the content of change.

Thus, for example, when a user is added, user registration unit 141 can add user identifier 101 of the user to user information storing unit 142. When device app 303 is changed (including addition), for example, when the OS of information processing terminal 200 or printer driver 220 is changed, device ID registration unit 185 can change device ID 102 in data storing unit 180 to device ID 102 for device app 303 that corresponds to the changed OS or printer driver 220.

The method of changing the content in user information storing unit 142 by user registration unit 141 or the method of changing the content in data storing unit 180 by device ID registration unit 185 is not limited to the method using a user operation through operation unit 172. For example, a Web browser or a dedicated application may be used.

### <J. Time of Acquiring Device App>

In the first embodiment, information processing terminal 200 performs the process of transmitting an acquisition request 38 for device ID (step S1 in Fig. 7) at a predetermined time. The predetermined time includes when the user logs in to information processing terminal 200 as described above. Thus, every time users are switched, that is, every time a user logs in, information processing terminal 200 can acquire device app 303 corresponding to the user.

The predetermined time is not limited to the time when a user logs in. For example, the predetermined time may include when printer driver 220 is installed (stored) into storage unit 26 of information processing terminal 200. Thus, in a case where printer driver 220 may be changed, device app 303 corresponding to the user can be installed every time printer driver 220 is installed into information processing terminal 200.

The predetermined time may include when printer driver 220 is activated and information processing terminal 200 connects to image forming apparatus 100 (set the communication port or change the communication port of communication controller 27) to start communication. Thus, for example, in a case where image forming apparatus 100 (printer) that information processing terminal 200 connects to may be changed, device app 303 corresponding to the user can be installed every time information processing terminal 200 connects to image forming apparatus 100 (printer).

The predetermined time may include when printer driver 220 is activated. Thus, in a case where printer driver 220 may be changed, information processing terminal 200 can install device app 303 corresponding to the user every time printer driver 220 is activated.

The predetermined time may include one or two or more of the foregoing: when the user logs in; when printer driver 220 is installed (stored) into storage unit 26 of information processing terminal 200; when information processing terminal 200 connects to image forming apparatus 100 to start communication, and when printer driver 220 is activated.

In the first embodiment, the installation of device app 303 is performed by overwriting a storage area in storage unit 26 of information processing terminal 200. Therefore, when device app 303 has already been stored in the storage area, a new device app 303 is installed at step S13 by overwriting the already stored device app 303. This processing can save an area for storing device app 303 in storage unit 26.

### [Second Embodiment]

A second embodiment is a modification to the forgoing first embodiment. In the first embodiment, information processing terminal 200 acquires device metadata 302 from server 300, whereas in the second embodiment, an image forming apparatus 100A generates device metadata 302A, and an information processing terminal 200A acquires the generated device metadata 302A from image forming apparatus 100A. Therefore, compared to the first embodiment, the second embodiment provides a wide variety of device metadata by generating device metadata 302A. Image forming apparatus 100A transmits device metadata 302A to information processing terminal 200A, whereby the traffic for acquiring device metadata can be reduced from the traffic between information processing terminal 200A and server 300A.

### <K. Functional Configuration of Units>

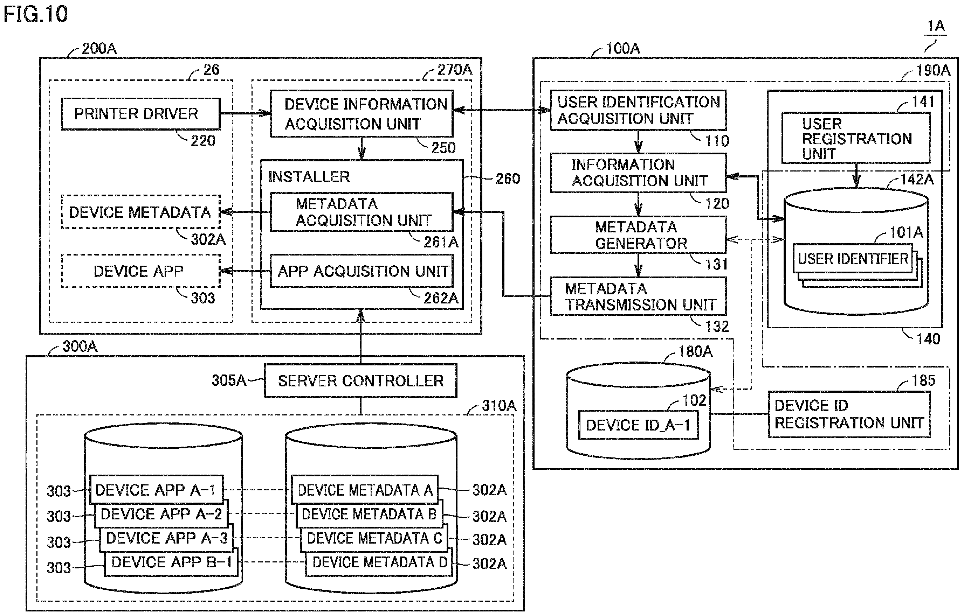

Fig. 10 is a block diagram schematically showing the functional configuration of the units according to the second embodiment. Referring to Fig. 10, a system 1A according to the second embodiment includes an information processing terminal 200A having a terminal controller 270A, an image forming apparatus 100A having a device controller 190A, and a server 300A having a server controller 305A. Terminal controller 270A includes a metadata acquisition unit 261A to acquire device metadata 302A from image forming apparatus 100A and an app acquisition unit 262A to acquire a device app 303 from server 300, instead of metadata acquisition unit 261 and app acquisition unit 262 in Fig. 6. The other configuration of information processing terminal 200A is similar to that shown in Fig. 6 and a description thereof will not be repeated. Device controller 190A of image forming apparatus 100A includes, in addition to the configuration in Fig. 6, a metadata generator 131 and a metadata transmission unit 132. Image forming apparatus 100A includes a user information storing unit 142A and a data storing unit 180A, instead of user information storing unit 142 and data storing unit 180 in Fig. 6. The other configuration of image forming apparatus 100A is similar to that of image forming apparatus 100 in Fig. 6 and a description thereof will not be repeated. Server 300A includes an app storing unit 310A in addition to server controller 305A.

Metadata generator 131 of image forming apparatus 100A generates device metadata 302A, and metadata transmission unit 132 controls communication circuit 175 such that the generated device metadata 302A is transmitted to information processing terminal 200A. User information storing unit 142A of image forming apparatus 100A stores user information 101A described later. Data storing unit 180A stores one device ID 102 for identifying image forming apparatus 100A. User registration unit 141 changes user information 101A in user information storing unit 142A, for example, in accordance with a user operation accepted through operation unit 172. Device ID registration unit 185 changes device ID 102 in data storing unit 180A, for example, in accordance with a user operation accepted through operation unit 172. User registration unit 141 may change the content of user information storing unit 142A using a Web browser or a dedicated application, and device ID registration unit 185 may change the content of data storing unit 180A using a Web browser or a dedicated application.

App storing unit 310A of server 300 stores a plurality of device metadata 302A and device apps 303 associated with the respective device metadata 302A. Server controller 305A searches app storing unit 310A for device app 303 associated with device metadata 302A based on device metadata 302A included in distribution request 40A (described later) for device app 303 that is received from information processing terminal 200A. Server controller 305A transmits (distributes) the retrieved device app 303 to information processing terminal 200. Device app 303 corresponding to the user is thus installed into information processing terminal 200 from server 300.

### <L. Example of Association Between User Identifier and Device ID>

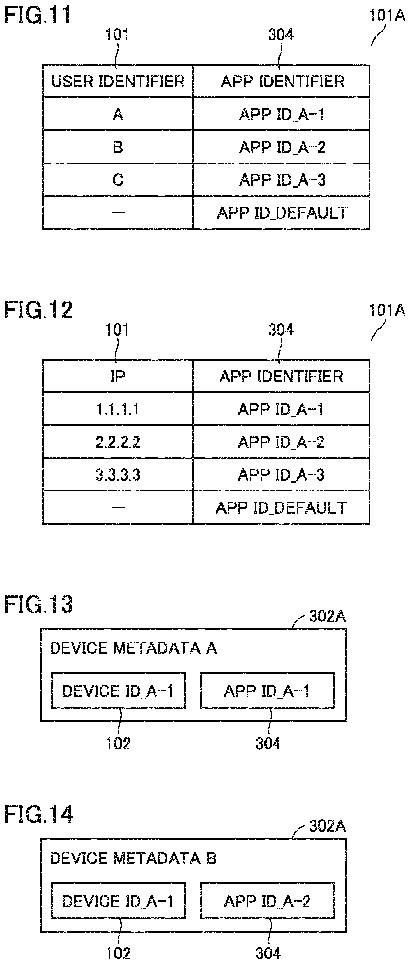

Fig. 11 and Fig. 12 are diagrams schematically showing a configuration of user information 101A according to the second embodiment. User information 101A includes one or more user identifiers 101 corresponding to the user ID and app identifiers 304 associated with user identifiers 101, as shown in Fig. 11. In user information 101A, user identifier 101 is not limited to a login ID and may be a network address such as the IP address of information processing terminal 200, as shown in Fig. 12. Alternatively, user identifier 101 may be a combination of the login ID and the network address such as IP address.

### <M. Generation of Device Metadata 302A>

Fig. 13 and Fig. 14 are diagrams showing an example of device metadata 302A generated by metadata generator 131 according to the present second embodiment. For example, when device metadata 302A for "user A" is generated, metadata generator 131 creates device metadata 302A shown in Fig. 13, which includes device ID 102 of data storing unit 180A and app identifier 304 associated with user identifier 101 of "user A" in user information 101A (for example, a combination thereof (set)). Similarly, when device metadata 302A for "user B" is generated, metadata generator 131 creates device metadata 302A shown in Fig. 14, which includes device ID 102 of data storing unit 180A and app identifier 304 associated with user identifier 101 of "user B" in user information 101A (for example, a combination thereof (a set)).

Device metadata 302A thus can vary with app identifier 304 included therein. As shown in Fig. 11 and Fig. 12, since app identifier 304 may be different for each user identifier 101, metadata generator 131 can create device metadata 302A different for each user. Therefore, device app 303 to be distributed to information processing terminal 200 upon a distribution request 40A including device metadata 302A can vary for each user.

### <N. Process Flowchart>

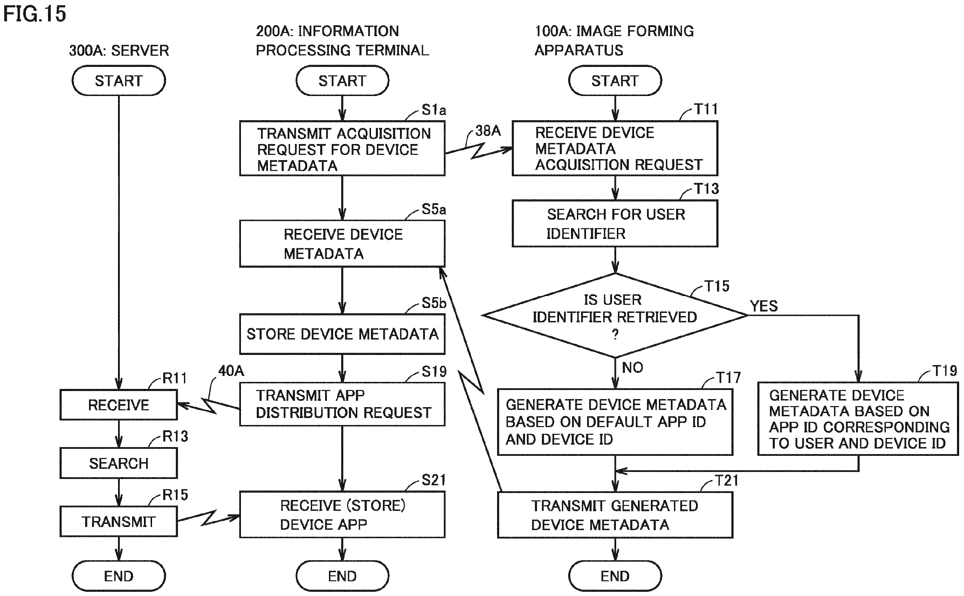

Fig. 15 is a flowchart of the process of acquiring a device app 303 by information processing terminal 200A according to the second embodiment. The flowchart in Fig. 15 shows the flowchart of the process performed in each of server 300A, information processing terminal 200A, and image forming apparatus 100A. Each flowchart is stored as a program in the storage unit and read by the CPU from the storage unit for execution.

Referring to Fig. 15, the flowchart on the information processing terminal 200A side is stored as a program in storage unit 26, and the program is read by CPU 20 from storage unit 26 for execution. First of all, when the user logs in to information processing terminal 200A to activate printer driver 220, device information acquisition unit 250 accepts a login ID from CPU 20. Device information acquisition unit 250 controls communication controller 27 such that an acquisition request 38A for device metadata 302A is transmitted to image forming apparatus 100 (step S1a).

Metadata acquisition unit 261A controls communication controller 27 such that device metadata 302A transmitted from image forming apparatus 100 is received (step S5a). Metadata acquisition unit 261A stores device metadata 302A received from image forming apparatus 100 into storage unit 26 (step S5b).

App acquisition unit 262A controls communication controller 27 such that a distribution request 40A for device app 303 is transmitted to server 300A (step S19). Distribution request 40A includes device metadata 302A in storage unit 26. App acquisition unit 262A controls communication controller 27 such that device app 303 transmitted from server 300A is received (step S21). App acquisition unit 262A stores device app 303 received from server 300A into storage unit 26.

The flowchart on the image forming apparatus 100A side is stored as a program in storage unit 160 or 153, and the program is read by CPU 150 from storage unit 160 or 153 for execution. First of all, user identification acquisition unit 110 controls communication circuit 175 such that an acquisition request 38A for device metadata is received from information processing terminal 200A (step T11). User identification acquisition unit 110 acquires the login ID from the received acquisition request 38A and outputs the acquired login ID to information acquisition unit 120.

Information acquisition unit 120 acquires user identifier 101 based on the login ID from user identification acquisition unit 110 (step T13). Specifically, information acquisition unit 120 searches user information 101A in user information storing unit 142A based on the login ID and acquires user identifier 101 that matches the login ID.

Information acquisition unit 120 determines whether user identifier 101 is retrieved (acquired) at step T13 (step T15). When information acquisition unit 120 determines that user identifier 101 is retrieved (YES at step T15), metadata generator 131 generates device metadata 302A from app identifier 304 associated with the retrieved user identifier 101 and device ID 102 in data storing unit 180A (step T19). On the other hand, when information acquisition unit 120 determines that user identifier 101 fails to be retrieved (NO at step T15), metadata generator 131 generates device metadata 302A from a default app identifier 304 and device ID 102 in data storing unit 180A (step T17).

Metadata transmission unit 132 controls communication circuit 175 such that the generated device metadata 302A is transmitted to information processing terminal 200A (step T21).

The flowchart on the server 300A side is stored as a program in storage unit 34, and the program is read by CPU 30 from storage unit 34 for execution. First of all, server controller 305A controls network controller 35 such that distribution request 40A for device app including device metadata 302A is received from information processing terminal 200A (step R11). Server controller 305A searches app storing unit 310A for one or more device apps 303 associated with device metadata 302A, based on device metadata 302A in the received distribution request 40A (step R13) and controls network controller 35 such that the retrieved one or more device apps 303 are transmitted to information processing terminal 200 (step R15).

With the process in Fig. 15, a device app 303 associated with device metadata 302A generated by image forming apparatus 100A is distributed to information processing terminal 200. This device metadata 302A is generated so as to include one or more app identifiers 304 associated with user identifier 101. Therefore, device app 303 distributed to information processing terminal 200 can vary for each user of information processing terminal 200.

### <0. Program>

A program is provided to allow image forming apparatus 100 (100A), information processing terminal 200 (200A), and server 300 (300A) to execute the processes described above. Such a program at least includes the program in accordance with the flowcharts shown in Fig. 7 and Fig. 15. The program may be recorded in a non-transitory manner on a computer-readable recording medium, such as a flexible disk, a compact disk-read only memory (CD-ROM), a ROM, a RAM, and a memory card, supplied with computers of image forming apparatus 100 (100A), information processing terminal 200 (200A), and server 300(300A), and provided as a program product. Further, the program may be recorded on a recording medium such as a hard disk contained in the computer. Further, the program may be downloaded via a network. The program may be executed by one or more processors such as a CPU or by a combination of a processor and a circuit such as ASIC and FPGA.

The program may allow a processor to execute a process by invoking necessary modules of program modules provided as part of the OS of a computer in a predetermined sequence and at a predetermined timing. In this case, the program itself does not include the modules, and a process is executed in cooperation with the OS. The program in the embodiments may include such a program that does not include the modules.

The program in the embodiments may be embedded in part of another program. Also in this case, the program itself does not include modules included in the other program and allows a processor to execute a process in cooperation with the other program. The program in the embodiments may include such a program embedded in the other program.

Although embodiments of the present invention have been described and illustrated in detail, it is clearly understood that the same is by way of illustration and example only and not limitation, the scope of the present invention should be interpreted by terms of the appended claims.

## Claims

1. A system comprising:
an information processing terminal (200);
a device (1.00) configured to operate in cooperation with the information processing terminal (200); and
a server (300) configured to communicate with the information processing terminal,
the device including
a data storing unit (160) for storing a device identifier for identifying the device, in association with each of a plurality of users of the information processing terminal and
a device controller (190) configured to identify a user of the information processing terminal by means of the device controller (190) being configured to acquire a user identifier of the user of the information processing terminal (200) from the information processing terminal (200) and transmit the device identifier associated with the identified user to the information processing terminal.
the server including
an app storing unit (310) to store a device application for controlling the device, in association with each of a plurality of the device identifiers and
a server controller (305) configured to receive the device identifier from the information processing terminal and transmit the device application associated with the received device identifier to the information processing terminal;
the information processing terminal (200) being configured to receive from the server and install the device application associated with the received device identifier.

2. The system according to claim 1, wherein
the app storing unit further stores device metadata including an app identifier for identifying one or more device applications, in association with each of the device identifiers.
the server controller is further configured to receive the device identifier from the information processing terminal and transmit the device metadata associated with the received device identifier to the information processing terminal, and
the information processing terminal includes a terminal controller configured to receive the device metadata from the server, extract one or more app identifiers from the received device metadata, and transmit the extracted one or more app identifiers to the server.

3. A system comprising:
an information processing terminal;
a device (100A) configured to operate in cooperation with the information processing terminal (200A); and
a server (300A) configured to communicate with the information processing terminal,
the device including
a user information storing unit (142) for storing an app identifier for identifying a device application for controlling the device, in association with each of a plurality of users of the information processing terminal, and
a device controller (190A) configured to identify a user of the information processing terminal by means of the device controller (190) being configured to acquire a user identifier of the user of the information processing terminal (200) from the information processing terminal (200), generate device metadata including the app identifier associated with the identified user and a device identifier for identifying the device, and transmit the generated device metadata to the information processing terminal,
the server including
an app storing unit (310A) to store the device application in association with each of a plurality of the device metadata and
a server controller (305A) configured to receive the device metadata from the information processing terminal and transmit the device application associated with the received device metadata to the information processing terminal
the information processing terminal (200) being configured to receive from the server and install the device application associated with the received device metadata.

4. The system according to claim 3, wherein
the device controller is configured to acquire a user identifier from the information processing terminal, and
the user identifier includes a login ID of a user who logs in to the information processing terminal or a network address of the information processing terminal,

5. The system according to the preceding claim, wherein
the data storing unit further stores the user identifier of each of the users and the device identifier associated with the user identifier, and
the device controller is further configured to add or change the user identifier or the device identifier in the data storing unit.

6. The system according to claim 3, wherein
the user information storing unit further stores the user identifier of each of the users and the app identifier associated with the user identifier, and
the device controller is further configured to add or change the user identifier in the user information storing unit.

7. The system according to any one of claims 3 to 6, wherein the device includes an image forming apparatus.

8. A method of controlling a device (100) configured to operate in cooperation with an information processing terminal (200) configured to be connectable to a server (300) through a network,
the server (300) including an app storing unit (310) to store a device application for controlling the device, in association with each of a plurality of device identifiers,
the information processing terminal including a communication controller (27) to transmit a distribution request (40) for a device application for controlling the device to the server,
the device including a data storing unit (160) for storing a device identifier in association with each of a plurality of users of the information processing terminal,
the method comprising;
a step (T13, T15) of identifying a user of the information processing terminal by acquiring a user identifier of the user of the information processing terminal (200) from the information processing terminal (200); and
a step (T21) of transmitting the device identifier associated with the identified user to the information processing terminal,
wherein the distribution request includes a distribution request for the device application associated with the device identifier received by the information processing terminal from the device controller, and
a step of receiving from the server and installing, by the information processing terminal, the device application associated with the received device identifier.

9. A method of controlling a device (100A) configured to operate in cooperation with an information processing terminal (200A) configured to be connectable to a server (300A) through a network,
the server including an app storing unit (310A) to store a device application for controlling the device, in association with each of a plurality of device metadata,
the information processing terminal including a communication controller (27) to transmit a distribution request (40A) for a device application for controlling the device to the server,
the device including a user information storing unit (142A) for storing an app identifier of the device application, in association with each of a plurality of users of the information processing terminal,
the method comprising:
a step (T11, T13) of identifying a user of the information processing terminal by acquiring a user identifier of the user of the information processing terminal (200) from the information processing terminal (200);
a step (T17, T19) of generating device metadata including the app identifier associated with the identified user and a device identifier of the device;
a step (T21) of transmitting the generated device metadata to the information processing terminal,
wherein the distribution request includes a distribution request for the device application associated with the app identifier in the device metadata received by the information processing terminal from the device; and
a step of receiving from the server and installing, by the information processing terminal, the device application associated with the received device metadata.

10. A program comprising instructions which, when executed by the system of claim 1 or 3, cause the system to respectively perform the method recited in claim 8 or 9.

## Patentansprüche

1. System, umfassend:
ein Informationsverarbeitungsendgerät (200);
eine Vorrichtung (100), die ausgebildet ist, in Zusammenwirkung mit dem Informationsverarbeitungsendgerät (200) zu arbeiten; und
einen Server (300), der ausgebildet ist, mit dem Informationsverarbeitungsendgerät zu kommunizieren,
wobei die Vorrichtung umfasst
eine Datenspeichereinheit (160) zum Speichern eines Vorrichtungsidentifikators zum Identifizieren der Vorrichtung unter Zuordnung zu jedem einer Mehrzahl von Nutzern des Informationsverarbeitungsendgeräts, und
eine Vorrichtungssteuereinrichtung (190), die ausgebildet ist, einen Nutzer des Informationsverarbeitungsendgeräts dadurch zu identifizieren, dass die Vorrichtungssteuereinrichtung (190) ausgebildet ist, einen Nutzeridentifikator des Nutzers des informationsverarbeitungsendgeräts (200) von dem Informationsverarbeitungsendgerät (200) zu erhalten und den Vorrichtungsidentifikator, der dem identifizierten Nutzer zugeordnet ist, an das Informationsverarbeitungsendgerät zu übertragen,
wobei der Server umfasst
eine App-Speichereinheit (310), um eine Vorrichtungsanwendung zum Steuern der Vorrichtung unter Zuordnung zu jedem einer Mehrzahl der Vorrichtungsidentifikatoren zu speichern, und
eine Serversteuereinrichtung (305), die ausgebildet ist, den Vorrichtungsidentifikator von dem Informationsverarbeitungsendgerät zu empfangen und die Vorrichtungsanwendung, die dem empfangenen Vorrichtungsidentifikator zugeordnet ist, an das Informationsverarbeitungsendgerät zu übertragen;
wobei das Informationsverarbeitungsendgerät (200) ausgebildet ist, die Vorrichtungsanwendung, die dem empfangenen Vorrichtungsidentifikator zugeordnet ist, von dem Server zu empfangen und zu installieren.

2. System nach Anspruch 1, wobei
die App-Speichereinheit des Weiteren Vorrichtungsmetadaten, die einen App-Identifikator zum Identifizieren einer oder mehr Vorrichtungsanwendungen umfassen, unter Zuordnung zu jedem der Vorrichtungsidentifikatoren speichert,
die Serversteuereinrichtung des Weiteren ausgebildet ist, den Vorrichtungsidentifikator von dem Informationsverarbeitungsendgerät zu empfangen und die Vorrichtungsmetadaten, die dem empfangenen Vorrichtungsidentifikator zugeordnet sind, an das Informationsverarbeitungsendgerät zu übertragen, und
das Informationsverarbeitungsendgerät eine Endgerätesteuereinrichtung umfasst, die ausgebildet ist, die Vorrichtungsmetadaten vom Server zu empfangen, einen oder mehr App-Identifikatoren aus den empfangenen Vorrichtungsmetadaten zu extrahieren, und die extrahierten einen oder mehr App-Identifikatoren an den Server zu übertragen.

3. System, umfassend:
ein Informationsverarbeitungsendgerät;
eine Vorrichtung (100A), die ausgebildet ist, in Zusammenwirkung mit dem Informationsverarbeitungsendgerät (200A) zu arbeiten; und
einen Server (300A), der ausgebildet ist, mit dem Informationsverarbeitungsendgerät zu kommunizieren,
wobei die Vorrichtung umfasst
eine Nutzerinformationsspeichereinheit (142) zum Speichern eines App-Identifikators zum Identifizieren einer Vorrichtungsanwendung zum Steuern der Vorrichtung unter Zuordnung zu jedem einer Mehrzahl von Nutzern des Informationsverarbeitungsendgeräts, und
eine Vorrichtungssteuereinrichtung (190A), die ausgebildet ist, einen Nutzer des Informationsverarbeitungsendgeräts dadurch zu identifizieren, dass die Vorrichtungssteuereinrichtung (190) ausgebildet ist, einen Nutzeridentifikator des Nutzers des Informationsverarbeitungsendgeräts (200) von dem Informationsverarbeitungsendgerät (200) zu erhalten, Vorrichtungsmetadaten zu erzeugen, die den dem identifizierten Nutzer zugeordneten App-Identifikator und einen Vorrichtungsidentifikator zum Identifizieren der Vorrichtung umfassen, und die erzeugten Vorrichtungsmetadaten an das Informationsverarbeitungsendgerät zu übertragen,
wobei der Server umfasst
eine App-Speichereinheit (310A), um eine Vorrichtungsanwendung unter Zuordnung zu jedem einer Mehrzahl der Vorrichtungsmetadaten zu speichern, und
eine Serversteuereinrichtung (305A), die ausgebildet ist, die Vorrichtungsmetadaten von dem Informationsverarbeitungsendgerät zu empfangen und die Vorrichtungsanwendung, die den empfangenen Vorrichtungsmetadaten zugeordnet ist, an das Informationsverarbeitungsendgerät zu übertragen;
wobei das Informationsverarbeitungsendgerät (200) ausgebildet ist, die Vorrichtungsanwendung, die den empfangenen Vorrichtungsmetadaten zugeordnet ist, von dem Server zu empfangen und zu installieren.

4. System nach Anspruch 3, wobei
die Vorrichtungssteuereinrichtung ausgebildet ist, einen Nutzeridentifikator von dem Informationsvararbeitungsendgerät zu erhalten, und
der Nutzeridehtifikatör eine Login-ID eines Nutzers umfasst, der sich in das Informationsverarbeitungsendgerät oder eine Netzwerkadresse des Informationsverarbeitungsendgeräts einloggt.

5. System nach dem vorhergehenden Anspruch, wobei
die Datenspeichereinheit des Weiteren den Nutzeridentifikator jedes der Nutzer und den Vorrichtungsidentifikator speichert, der dem Nutzeridentifikator zugeordnet ist, und
die Vorrichtungssteuereinrichtung des Weiteren ausgebildet ist, den Nutzeridentifikator oder den Vorrichtungsidentifikator in der Datenspeichereinheit hinzuzufügen oder zu verändern.

6. System nach Anspruch 3, wobei
die Nutzerinformtationsspeichereinheit des Weiteren den Nutzeridentifikator jedes der Nutzer und den App-Identifikator speichert, der dem Nutzeridentifikator zugeordnet ist, und
die Vorrichtungssteuereinrichtung des Weiteren ausgebildet ist, den Nutzeridentifikator in der Nutzerinformationsspeichereinheit hinzuzufügen oder zu verändern.

7. System nach einem der Ansprüche 3 bis 6, wobei die Vorrichtung eine Bilderzeugungsvorrichtung umfasst.

8. Verfahren zum Steuern einer Vorrichtung (100), die ausgebildet ist, in Zusammenwirkung mit einem Informationsverarbeitungsendgerät (200) zu arbeiten, das ausgebildet ist, mit einem Server (300) über ein Netzwerk ver bindbar zu sein,
wobei der Server (100) eine App-Speichereinheit (310) umfasst, um eine Vorrichtungsanwendung zum Steuern der Vorrichtung unter Zuordnung zu jedem einer Mehrzahl von Vorrichtungsidentifikatoren zu speichern,
wobei das Informationsverarbeitungsendgerät eine Kommunikationssteuereinrichtung (27) umfasst, um eine Verteilungsanforderung (40) für eine Vorrichtungsanwendung zum Steuern der Vorrichtung an den Server zu übertragen,
wobei die Vorrichtung eine Datenspeichereinheit (160) zum Speichern eines Vorrichtungsidentifikators unter Zuordnung zu jedem einer Mehrzahl von Nutzern des Informationsverarbeitungsendgeräts umfasst,
wobei das Verfahren umfasst:
einen Schritt (T13, T15) des Identifizierens eines Nutzers des Informationsverarbeitungsendgeräts durch Erhalten eines Nutzeridentifikators des Nutzers des Informationsverarbeitungsendgeräts (200) von dem Informationsverarbeitungsendgerät (200); und
einen Schritt (T21) des Übertragens des Vorrichtungsidentifikators, der dem identifizierten Nutzer zugeordnet ist, an das Informationsverarbeitungsendgerät,
wobei die Verteilungsanforderung eine Verteilungsanforderung für die Vorrichtungsanwendung umfasst, die dem Vorrichtungsidentifikator zugeordnet ist, der durch das Informationsverarbeitungsendgerät von der Vorrichtungssteuereinrichtung empfangen wird, und
einen Schritt des Empfangens vom Server und des Installierens der dem empfangenen Vorrichtungsidentifikator zugeordneten Vorrichtungsanwendung durch das Informationsverarbeitungsendgerät.

9. Verfahren zum Steuern einer Vorrichtung (100A), die ausgebildet ist, in Zusammenwirkung mit einem Informationsverarbeitungsendgerät (200A) zu arbeiten, das ausgebildet ist, mit einem Server (300A) über ein Netzwerk verbindbar zu sein,
wobei der Server eine App-Speichereinheit (310A) umfasst, um eine Vorrichtungsanwendung zum Steuern der Vorrichtung unter Zuordnung zu jedem einer Mehrzahl von Vorrichtungsmetadaten zu speichern,
wobei das Informationsverarbeitungsendgerät eine Kommunikationssteuereinrichtung (27) umfasst, um eine Verteilungsanforderung (40A) für eine Vorrichtungsanwendung zum Steuern der Vorrichtung an den Server zu übertragen,
wobei die Vorrichtung eine Nutzerinformationsspeichereinheit (142A) zum Speichern eines App-Identifikators der Vorrichtungsanwendung unter Zuordnung zu jedem einer Mehrzahl von Nutzern des Informationsverarbeitungsendgeräts umfasst,
wobei das Verfahren umfasst:
einen Schritt (T11, T13) des Identifizierens eines Nutzers des Informationsverarbeitungsendgeräts durch Erhalten eines Nutzeridentifikators des Nutzers des Informationsverarbeitungsendgeräts (200) von dem Informationsverarbeitungsendgerät (200);
einen Schritt (T17, T19) des Erzeugens von Vorrichtungsmetadaten die den App-Identifikator, der dem identifizierten Nutzer zugeordnet ist, und einen Vorrichtungsidentifikator der Vorrichtung umfassen.
einen Schritt (T21) des Übertragens der erzeugten Vorrichtungsmetadaten an das Informationsverarbeitungsendgerät,
wobei die Verteilungsanforderung eine Verteilungsanforderung für die Vorrichtungsanwendung umfasst, die dem App-Identifikator in den Vorrichtungsmetadaten zugeordnet ist, die durch das Informationsverarbeitungsendgerät von der Vorrichtung empfangen werden, und
einen Schritt des Empfangens vom Server und des Installierens der den empfangenen Vorrichtungsmetadaten zugeordneten Vorrichtungsanwendung durch das Informationsverarbeitungsendgerät.

10. Ein Programm, das Befehle umfasst, die, wenn sie durch das System nach Anspruch 1 oder 3 ausgeführt werden, bewirken, dass das System jeweils das Verfahren durchführt, das in Anspruch 8 oder 9 angeführt wird.

## Revendications

1. Système comprenant:
un terminal de traitement d'information (200);
un dispositif (100) configuré pour fonctionner en coopération avec le terminal de traitement d'information (200); et
un serveur (300) configuré pour communiquer avec le terminal de traitement d'information,
le dispositif incluant
une unité de stockage de données (160) pour stocker un identificateur de dispositif pour identifier le dispositif, en association avec chacune d'une pluralité d'utilisateurs du terminal de traitement d'information et
un contrôleur de dispositif (190) configuré pour identifier un utilisateur du terminal de traitement d'information par moyen du contrôleur de dispositif (190) étant configuré pour acquérir un identificateur d'utilisateur de l'utilisateur du terminal de traitement d'information (200) à partir du terminal de traitement d'information (200) et transmettre l'identificateur de dispositif associé avec l'utilisateur identifié au terminal de traitement d'information,
le serveur incluant
une unité de stockage d'applications (310) pour stocker une application de dispositif pour la commande de dispositif, en association avec chacune d'une pluralité des identificateurs de dispositif et
un contrôleur de serveur (305) configuré pour recevoir l'identificateur de dispositif du terminal de traitement d'information et transmettre l'application de dispositif associée avec l'identificateur de dispositif reçu au terminal de traitement d'information;
le terminal de traitement d'information (200) étant configuré pour recevoir du serveur et installer l'application de dispositif associée avec l'identificateur de dispositif reçu.

2. Système selon la revendication 1, où
l'unité de stockage d'applications fait stocker en outre les métadonnées du dispositif incluant un identificateur d'applications pour identifier une ou plusieurs applications de dispositif, en association avec chacun des identificateurs de dispositif,
le contrôleur de serveur est en outre configuré pour recevoir l'identificateur de dispositif du terminal de traitement d'information et transmettre les métadonnées de dispositif associées avec l'identificateur de dispositif reçu au terminal de traitement d'information, et
le terminal de traitement d'information comprend un contrôleur de terminal configuré pour recevoir les métadonnées de dispositif du serveur, extraire un ou plusieurs identificateurs d'applications des métadonnées de dispositif reçues, et transmettre un ou plusieurs identificateurs d'applications extraits au serveur.

3. Système comprenant:
un terminal de traitement d'information;
un dispositif (100A) configuré pour fonctionner en coopération avec le terminal de traitement d'information (200A); et
un serveur (300A) configuré pour communiquer avec le terminal de traitement d'information,
le dispositif incluant
une unité de stockage d'information d'utilisateur (142) pour stocker un identificateur d'applications pour identifier une application de dispositif pour commander le dispositif, en association avec chacune d'une pluralité d'utilisateurs du terminal de traitement d'information, et
un contrôleur de dispositif (190A) configuré pour identifier un utilisateur du terminal de traitement d'information par moyen du contrôleur de dispositif (190) étant configuré pour acquérir un identificateur d'utilisateur de l'utilisateur du terminal de traitement d'information (200) à partir du terminal de traitement d'information (200), fait générer les métadonnées de dispositif incluant l'identificateur d'applications associé avec l'utilisateur identifié et un identificateur de dispositif pour identifier le dispositif, et transmettre les métadonnées de dispositif générées au terminal de traitement d'information,
le serveur incluant
une unité de stockage d'applications (310A) pour stocker l'application de dispositif en association avec chacune d'une pluralité de métadonnées de dispositif et
un contrôleur de serveur (305A) configuré pour recevoir les métadonnées de dispositif du terminal de traitement d'information et transmettre l'application de dispositif associée avec les métadonnées de dispositif reçues au terminal de traitement d'information;
le terminal de traitement d'information (200) étant configuré pour recevoir du serveur et installer l'application de dispositif associée avec les métadonnées de dispositif reçues.

4. Système selon la revendication 3, où
le contrôleur de dispositif est configuré pour acquérir un identificateur d'utilisateur du terminal de traitement d'information, et l'identificateur d'utilisateur comprend un ID de connexion d'un utilisateur qui se connecte au terminal de traitement d'information ou une adresse de réseau du terminal de traitement d'information,

5. Système selon la revendication antérieure, où
l'unité de stockage de données fait stocker en outre l'identificateur d'utilisateur de chacun des utilisateurs et l'identificateur de dispositif associé avec l'identificateur d'utilisateur, et
le contrôleur de dispositif est en outre configuré pour ajouter ou changer l'identificateur d'utilisateur ou l'identificateur de dispositif dans l'unité de stockage de données.

6. Système selon la revendication 3, où
l'unité de stockage d'informations d'utilisateur fait stocker de plus l'identificateur d'utilisateur de chacun des utilisateurs et l'identificateur d'applications associé avec l'identificateur d'utilisateur, et
le contrôleur de dispositif est en outre configuré pour ajouter ou changer l'identificateur d'utilisateur dans l'unité de stockage d'informations d'utilisateur.

7. Système selon l'une quelconque des revendications 3 à 6, où le dispositif comprend un appareil de formation d'images.

8. Procédé de commande un dispositif (100) configuré pour fonctionner en coopération avec un terminal de traitement d'information (200) configuré pour être connecté à un serveur (300) par un réseau,
le serveur (300) incluant une unité de stockage d'applications (310) pour stocker une application de dispositif pour commander le dispositif, en association avec chacune d'une pluralité d'identificateurs de dispositif,
le terminal de traitement d'information incluant un contrôleur de communication (27) pour transmettre une demande de distribution (40) pour une application de dispositif pour commander le dispositif au serveur,
le dispositif incluant une unité de stockage de données (160) pour stocker un identificateur de dispositif en association avec chacune d'une pluralité d'utilisateurs du terminal de traitement d'information,
le procédé comprenant:
une étape (T13, T15) pour identifier un utilisateur du terminal de traitement d'information en acquérant un identificateur d'utilisateur de l'utilisateur du terminal de traitement d'information (200) à partir du terminal de traitement d'information (200); et
une étape (T21) de transmettre l'identificateur de dispositif associé avec l'utilisateur identifié au terminal de traitement d'information,
où la demande de distribution comprend une demande de distribution pour l'application de dispositif associée avec l'identificateur de dispositif reçu par le terminal de traitement d'information du contrôleur de dispositif, et
une étape de recevoir du serveur et installer, par le terminal de traitement d'information, l'application de dispositif associée avec l'identificateur de dispositif reçu.

9. Procédé de commande un dispositif (100A) configuré pour fonctionner en coopération avec un terminal de traitement d'information (200A) configuré pour être connecté à un serveur (300A) par un réseau,
le serveur incluant une unité de stockage d'applications (310A) pour stocker une application de dispositif pour commander le dispositif, en association avec chacune d'une pluralité de métadonnées de dispositif,
le terminal de traitement d'information incluant un contrôleur de communication (27) pour transmettre une demande de distribution (40A) pour une application de dispositif pour commander le dispositif au serveur,
le dispositif incluant une unité de stockage d'information d'utilisateur (142A) pour stocker un identificateur d'applications de l'application de dispositif, en association avec chacune d'une pluralité d'utilisateurs du terminal de traitement d'information,
le procédé comprenant:
une étape (T11, T13) pour identifier un utilisateur du terminal de traitement d'information en acquérant un identificateur d'utilisateur de l'utilisateur du terminal de traitement d'information (200) à partir du terminal de traitement d'information (200);
une étape (T17, T19) pour générer les métadonnées de dispositif incluant un identificateur d'applications associé avec l'utilisateur identifié et un identificateur de dispositif du dispositif;
une étape (T21) de transmettre les métadonnées de dispositif générées au terminal de traitement d'information,
où la demande de distribution comprend une demande de distribution pour l'application de dispositif associée avec l'identificateur d'applications dans les métadonnées de dispositif reçues par le terminal de traitement d'information du dispositif, et
une étape de recevoir du serveur et installer, par le terminal de traitement d'information, l'application de dispositif associée avec les métadonnées de dispositif reçues.

10. Programme comprenant les instructions qui, quand exécutées par le système de la revendication 1 ou 3, cause au système réaliser respectivement le procédé décrit dans la revendication 8 ou 9.
